# EUROPEAN PATENT SPECIFICATION

(11) **EP 3 844 383 B1**
(45) Date of publication and mention of the grant of the patent: **10.01.2024**
(21) Application number: 19779211.2
(22) Date of filing: 08.08.2019
(51) Int. Cl.: F03B 17/06, E02B 9/08

(54) **SEA CURRENT TURBINE**
MEERESSTRÖMUNGSTURBINE
TURBINE À COURANT MARIN

(30) Priority: 31.08.2018 NO 20181135
(43) Date of publication of application: 07.07.2021
(73) Proprietor: Randsea AS, 3106 Nøtterøy (NO)
(72) Inventor: FAGERENG, Arill, 3128 Nøtterøy (NO)
(74) Representative: Acapo AS
(86) International application number: PCT/NO2019/050162
(87) International publication number: WO 2020/046134

(56) References cited:
- WO-A1-2017/213518
- JP-A- 2000 087 840
- US-A- 402 055
- US-A- 3 928 771

## Description

The present invention relates to an ocean current turbine. Specifically, it applies to an ocean current turbine where the main frame is boat shaped with a bow, continuous convex frame sides, and with a transom stern. The shape of the main frame is more or less equal to the waterline of a dinghy with continuously convex sides and with a mid-section of greater width than the width of the transom stern. Along the continuous convex frame sides runs a starboard, respectively, port main chain with transverse plates that catches by the water flow, and the main chain drives a wheel that is connected to a generator to convert the momentum energy to e.g., electrical energy, or a pump that generates hydraulic pressure energy. From the stern, the plates turn from transverse to longitudinal, and the main chain returns in a shielded space between the frame sides, and with the plates aligned along the chain.

### Disclosure of the state of art

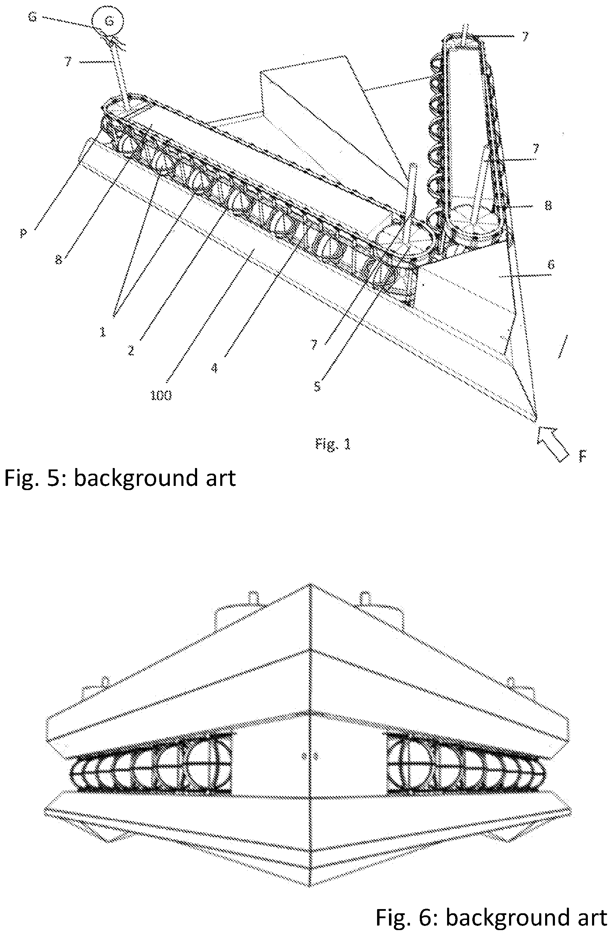

Norwegian patent NO341417 based on the patent application NO20160991 filed June 10, 2016, describes an ocean power plant wherein the main frame is of a sharp V-shape with a tip towards the current, two straight frame sides with linearly increasing distance with the distance from the tip, and with a wide straight stern. The main frame is V-shaped, see enclosed Fig. 5. Along runs a starboard, respectively, a port main chain with transverse plates that catches by the water flow, and the main chain drives a wheel that is connected to a generator to convert the momentum energy to e.g., electrical energy. From the rear end at the widest point are the plates rotated from transverse to longitudinal, and the main chain returns in a shielded space between the frame sides, and with the plates aligned along the chain. It was assumed at the submission of NO20160991 that the clear V-shape would give the greatest momentum energy transfer of the water to the plates driving the main chains, when it was assumed that each plate would be equally exposed to the accruing water flow when looking at the V-shaped geometry where each plate is seen equally much in a front view, see Fig. 6.

US 3.928.771 A1 relates to a water current power generator system, where the system comprises one or more generator ships firmly anchored to the water bottom to generate power from sea currents or the tidal flow of rivers. The hull of a typical ship includes an inlet where the moving water enters, and drives blades hinged to a toothed belt which moves about a pair of rollers. As the blades move about the forward roller, the hinged blades are driven outwardly to a right angle position to be driven by the water flow. The blades fold into a collapsed position as they pass over the rear roller and move in a direction opposite the water flow thereby minimizing resistance to the water flow. Generally, a pair of toothed belts are provided within each shaped inlet with a thrust member therebetween to direct the water towards the blades. The belts are mounted vertically within the hull to encounter as much of the water pressure as possible. The water then flows out the rear of the hull through a shaped outlet which is smaller than the inlet. In an alternate embodiment, vertical water wheels with collapsible blades are used instead of toothed belts. This variation would include at least one of such wheels positioned at the inlet and having hinged members serving as blades mounted on the wheels to catch the water flow thereby driving the wheel. The blade would then pivot to an open position minimizing resistance to the motion of the wheel as it moves around the axis of said wheel.

### Description of the drawings

The invention is illustrated in the enclosed figures:
**Fig.** 1 is a figure in a perspective view of an embodiment of the improved ocean current turbine and shows one bow part (PB) arranged to face the current, and Port side frame (PP) and a partially concealed drive chain (4) with plates (1) that are exposed along large parts of the side frame from the bow part and backwards with the current until the side frame is cut short by a transverse wide stern part (PA). The side frame is continuously convex, i.e., it curves outwardly throughout its length.

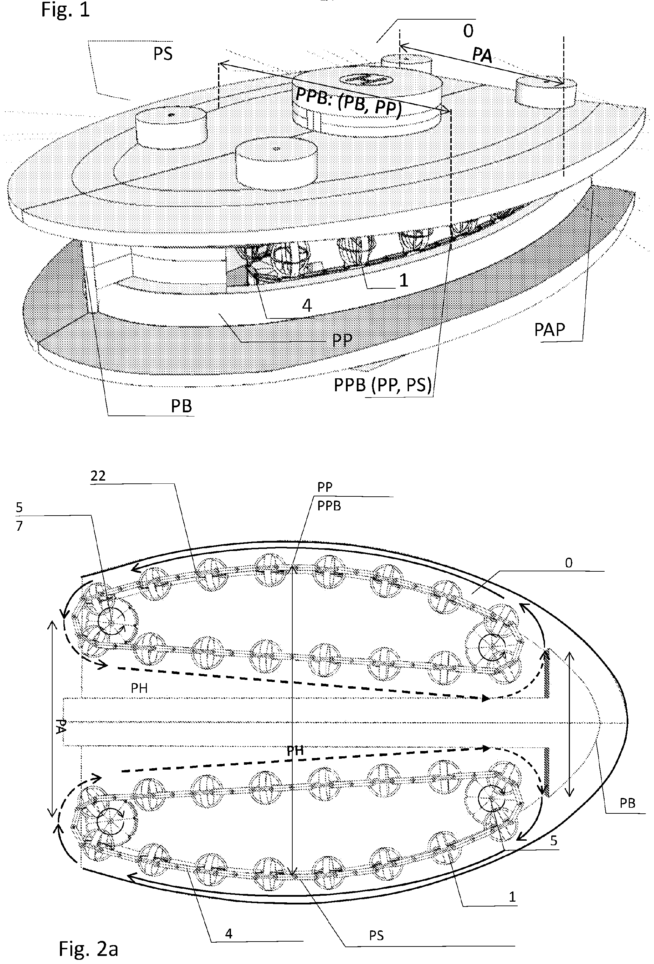

**Fig. 2a** is a plane section of an embodiment of the ocean current turbine according to the invention. The plane section shows port and starboard endless rotation chains (4) with the plates that are aligned to, after being positioned transverse and captured by the water current (F) at the bow part (PB), to be driven rearward along the starboard, and port side frames (PS, PP) respectively, of the water current when the plate runs in starboard and port rotational chain (4) respectively along the convex side frames (PS, PP) to the rear outer end of the wide stern part (PA), for then turning to a passive state where they mainly do not catch the water, and move forward again by the rotation chain (4) in a shielded cavity (PH) between starboard and port side frames (PS, PP) and that extend forwardly again to the bow part (PB). The chain (4) is thus closed.
**Fig. 2b** is a perspective view from stern of the main frame (0) and showing the stern part (PA) where the vertical axles (7) of the two wheels (5) are arranged on opposite sides at the bow part **(PB).**
**Fig. 2c** is a side view of the main frame (0) seen from the starboard side.
**Fig. 2d** is a front elevation of the main frame (0), with the bow part (PB) facing the reader.
**Fig. 3** is a top view of the main frame (0) with its top plate (00) and an outline of the U-shaped groove (8) if the plates (1) run from the bow part (0) to the stern part (PA). The length of the entire construction can be on the order of 20 to 200 meters, preferably 50 to 150 meters, and in figure 7 it is shown an embodiment of the shape of the starboard frame side (PS) with a hull length of 100 meters.
**Fig. 4** is a perspective view of the main frame (0) with the drive chains (4) extending between the front wheels (5) and the rear wheels (5), and showing the direction of movement of a part of starboard plates in starboard (upper) drive chain (4).
**Fig. 5** shows the background art, in particular the shape of the main frame in NO341417.
**Fig. 7** shows embodiments of the shape of starboard frame side (PS) with a hull length of 100 meters.
**Fig. 8A** shows velocity calculations in the water as calculated in a horizontal plane along a model of the present invention wherein the water velocity is initially 2.5 m/s. L=100 m.
**Fig. 8B** shows dynamic pressure calculations in the water calculated in connection with the velocity variations calculated in Fig. 8A.
**Fig. 9** shows a turning mechanism for a plate (1) at the front or rear wheel (5) adapted to turn a plate 90 degrees relative to the drive chain (4), from longitudinal to transverse, or from transverse to longitudinal.

### Summary of the Invention

The invention is an ocean current turbine as defined in claim 1.

Further specifics of the embodiments of the invention are found in the dependent claims.

### Description of embodiments of the invention

**Fig. 1** is a perspective view of an embodiment of an improved ocean current turbine according to the invention and shows a bow part (PB) arranged to face a current, and a port side frame (PP) and a partially concealed drive chain (4) with plates (1) that are exposed along large parts of the side frame from the bow part and rearward with the current until the side frame is cut short by a transverse wide stern part (PA). The side frame is continuously convex, that is, it bends outwards throughout its length.

**Fig. 2a** is a plane section of an embodiment of the ocean current turbine according to the invention. The plane section shows port and starboard endless rotation chains (4) with the plates that are adapted to, after being set transverse and caught by the water current (F) at the bow part (PB), to be driven backwards along the starboard, respectively port side frame (PS, PP), of the water current when the plate runs in starboard, respectively port rotational chain (4) along respectively the convex side frames (PS, PP) back to the rear end of the wide stern part (PA), for then turning to a passive state where they mainly do not catch the water, and are led forward again by the rotation chain (4) in a shielded cavity (PH) between starboard and port side frames (PS, PP) and that extends forward to the bow part (PB). The chain (4) is thus endless.

The plates (1) are arranged to be turned in the chain (4) so that they are transverse relative to the chain on their way backwardly, and turned along with the chain (4) on their way forwardly. There is a mechanism at a front wheel (5) that reverses the plates (1) from longitudinal to transverse relative to the chain (4), and an opposite mechanism at a stern wheel (5) which reverses the plate (1) from transverse to longitudinal relative to the chain (4). The mechanism for such reversing is described in details in NO341417. The plate (1) is, in one embodiment, two half plates that fold out and forms a transverse plate, and which can be folded together so that the two half plates are turned parallel to the chain (4). In another embodiment the plate (1) may be a whole plate that is turned between a transverse to a longitudinal position and back again, relative to the chain.

The bow part (PB) is in one embodiment a plate construction or solid construction with curved or partly pointed front facing the main direction of the water current so that the water current is divided into one starboard and one port water current which is led at the top and bottom by a top and a bottom plate.

Port and starboard side frames (PS, PP) are continuously convex and extend from the bow part (PB) and back to the transverse wide stern part (PA) which even so is narrower than the largest distance between port and starboard side frames (PS, PP). It turns out that this taper of port and starboard side frames (PS, PP) relative to the largest width, "beam width point", (PPB), of the main frame (0) gives a better water velocity- and pressure distribution on the plates (1) that are arranged transversely in the chain (4), compared to the prior art which shows a V-shaped main shape. This was a surprising effect.

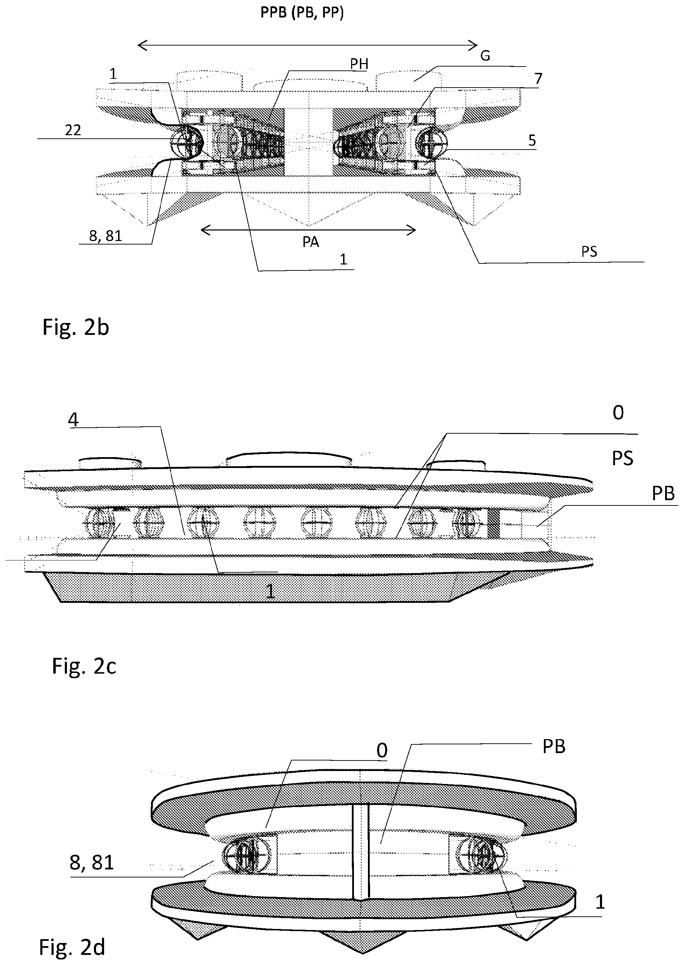

**Fig. 2b** is a perspective view seen from the stern view of the main frame (0) showing the stern part (PA) where the vertical axles (7) of the two wheels (5) are arranged on opposite sides at the stern part. In this perspective one also sees cylindrical housings axially above the axles (7) of the wheels (5) and which can accommodate a generator (G) for generating electric current as an end result of the work of the water current on the plates (1) and the drive chain (4) which rotates the wheels (5) on the generator axle (7). The generator (G) can alternatively generate hydrogen indirectly and compress it. In the figure it is sketched that the plates (1) on the exterior along the starboard and port frame sides (PS, PP) are transverse and capture the water current, and that the plates (1) along the inner path of the cavity (PH) are longitudinally aligned with the chain (4), consequently they do not catch the water. It is also shown here that the plates (1) are exposed to the water current in a U-shaped groove (8) between an upper and a lower curved longitudinal surface (81) extending from near the bow part (PB) and back to near the rear wheel (5) at the stern part (PA). This groove (8) can also be arranged between an upper and lower hull plate (82) which also contributes to catch and collect the water current in towards the groove (8) with the plates (1). If the plates (1) are rectangular, the groove is not U-shaped but rectangular.

From the figure 2b it is shown that the drive chain (4) (upper and lower) and also the wheels (5) are covered by the curved longitudinal surface (81), so that the water current is concentrated to run along the plates (1) and not to interfere with the drive chain (4) and particularly the wheels (5). Each frame (2) and also intermediate links on the drive chain (4) may have upward and downward protruding pins (22) with transverse carriages (23) that grips around and runs along an upper, respectively lower rail (101) arranged along the desired path of the drive chain. These pins (22) are also arranged to engage vertical recesses in the drive wheels (5) to drive those around.

**Fig. 2c** is a side view of the main frame (0) seen from the starboard side. Here, starboard open groove (8) is shown, with the longitudinal, curved surfaces (81) that conceal the drive chains (4), the wheels (5) and the pins (22), but which expose the plates (1) which are transversely aligned along the frame sides (PS, PB) relative to the drive chain and hence the water current past. The groove (8) extends within the curved surfaces (81) as again extend all the way from the bow part (PB) and back to the stern part (PA).

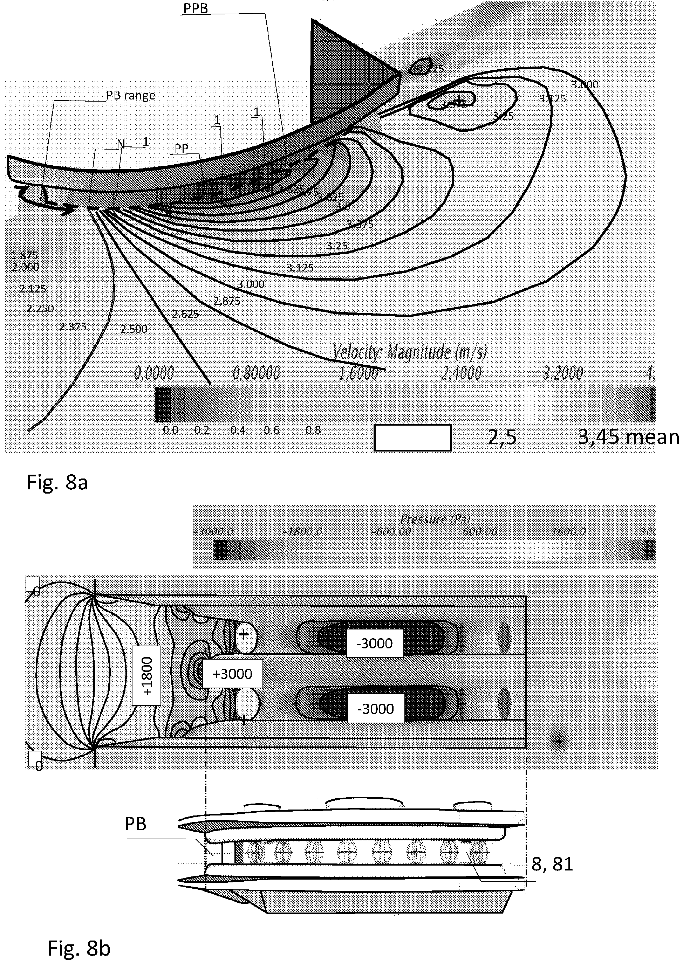

**Fig. 2d** is a view of the main frame (0) seen from a front view, with the bow part (PB) facing the reader. The beginning of each row of transverse plates (1) that is caught by the water current (F) is exposed in the U-shaped groove (8) with the curved surfaces (81) above and below, is also clearly shown here. Note that the bow part (PB) which shields for the wheels (5) and the front and forward running plates (1) is quite broad here: for that reason, the longitudinal water velocity and pressure are not especially developed here at the bow, we refer to the velocity- and pressure- curves in Fig. 8. The width of the bow part (PB) can be between 1/4 and 1/2 of the largest width (PPB) between port and starboard frame sites (PP, PS).

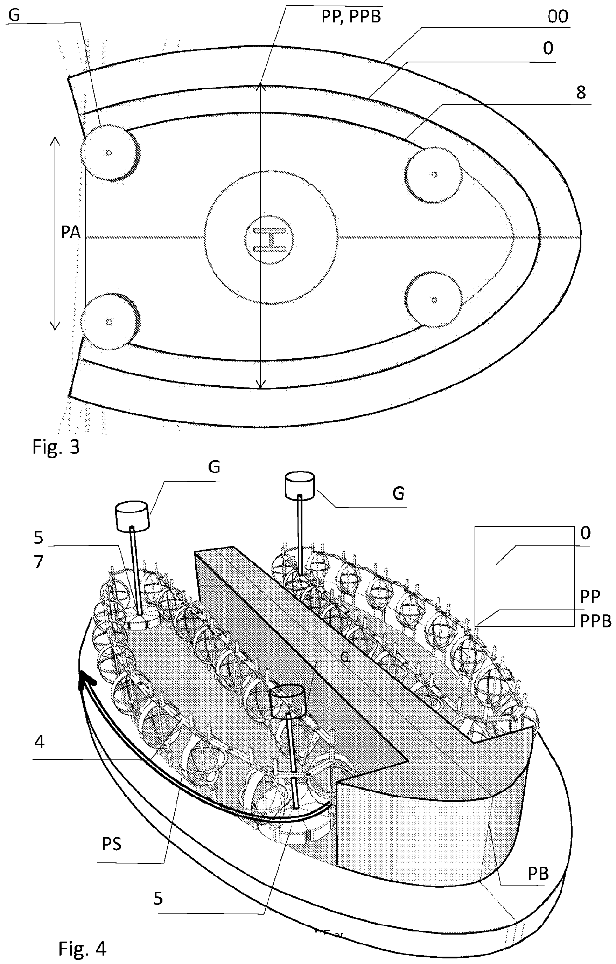

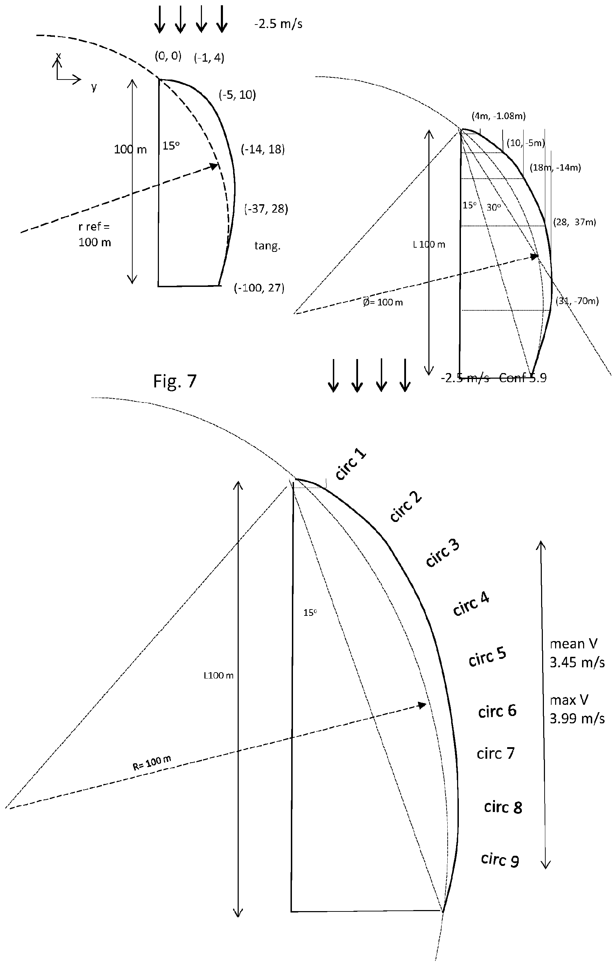

**Fig. 3** is a top view of the main frame (0) with its top plate (00) and outline of the U-shaped groove (8) wherein the plates (1) run along from the bow part (0) to the stern part (PA). The length of the entire construction may be in the order of 20 to 200 meters, preferably 50 to 150 meters, and in Fig. 7 an embodiment of the shape of the starboard frame side (PS) with a hull length of 100 meters shown.

**Fig. 4** is a perspective view of the main frame (0) with the drive chains (4) extended between the front wheels (5) and the rear wheels (5), and showing the direction of movement for a part of starboard plates in starboard (upper) drive chain (4). Here, only the lower wheels and the upper drive chains are shown for clarity, and in one embodiment there is an upper and a lower drive chain (4).

**Fig. 5** shows the background art, in particular the shape of the main frame of NO341417. There the starboard and port frame sides are straight and form an angle of 30 degrees with the centre line through the bow to the stern.

**Fig. 7** shows embodiments of the shape of the starboard frame side (PS) with a hull length of 100 meters, used in the modelling in Fig. 8. "circ 1", "circ 2" etc. shows the location of 8 circles representing plates (1) along the U-shaped groove (8) along the starboard frame side (PS) in the modelling of the speeds along the groove, see Fig. 8.

**Fig. 8A** shows velocity calculations in the water calculated in a horizontal plane along a model of the present invention wherein the water velocity is initially 2.5 m/s. L = 100 m. The model is slightly different from the above drawings in that imagined plates (1) are inserted also at the front of the bow part (PB). The detailed speed calculations shows that the speed is lower than the incoming water velocity 2.5 m/s in front of a point (N) along the frame side (PP), so for that reason it has no purpose to allow the plates (1) to start their journey from a point in front of this, as they would be slowed down by the water if they run at an average speed. Therefore, the bow part (PB) does not constitute an obstruction for the plates even though it shields the incoming water current throughout its entire width. Behind this bow part (PB) we have arranged the two relatively large wheels (5) about which the chain (4) with the plates (1) turn. The water velocity calculations along the frame side reaches a maximum of over 4 m/s, is high also astern of the largest width (PPB) on the frame side (PP), and stays above 3.125 until the end of the stern part (PA), and the average speed is 3.45 m/s which is 0.95 m/s higher than the surrounding water current of 2.5 m/s. (the calculations are performed in 32 levels from 1/8 m/s to 4 m/s, with 0.125 m/s contour interval.) An eddy current with high water velocity is formed also astern for the outer end of the transom stern part (PA) but the water velocities at some distance outside the plates (1) and the entire structure has little significance for the energy utilization in this invention; it is the water velocity immediately around the plates (1) that has any significance. Here is thus a considerable opportunity to convert the water velocity and pressure to rotational energy through the wheels (5) and drive the generator (8). Behind the transverse stern part (PA) it forms on each side
of the centre line an eddy with very low water velocities, but its extension is narrow and elongate. The model calculations also shows that the water pressure increases backwards from point N and is enduring to far behind the largest width of the frame (PPB). This contributes along with the high and steady water velocity of the plates (1) to be driven more efficiently. One may assume that one of the reasons for the high efficiency is this, while at the same the transom stern is much narrower than in the prior art in which the width of the stern mirror corresponds to the length of the structure, and that thus in the prior art a lot of energy is lost in the large eddy that must be formed.

The modelling of the velocity conditions of the present invention shows somewhat surprising that the shape of starboard and port frame sides (PS, PB) as continuous convex and with a certain tapered stern of a widest point, provides a significantly higher velocity than the initial water speed, and this occurs along the entire exposed part of the frame sides, and it also has significantly greater efficiency than the triangle model of the prior art shown in Fig. 5.

**Fig. 8B** shows dynamic pressure calculations in the water calculated in conjunction with them the speed variations calculated in Fig. 8A. Note that it is calculated for a double embodiment with two rows of plates (1) in Fig. 8B. You see here that the pressure builds up at the bow part (PB) to about 3000 Pascal, but that the pressure, as the velocity increases along the frame side (PP) in the model, decreases towards -3,000 Pa over a long range and continues all the way back to the stern end of the frame side (PP), along the same range wherein the velocity is significantly increased.

There are no sudden, undesired pressure variations along the channel (8, 81) in the flow model according to the invention.

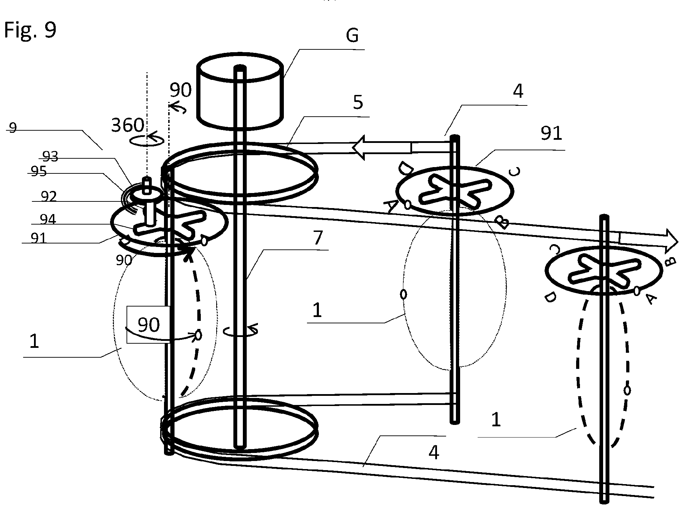

**Fig. 9** shows a turning mechanism for a plate (1) at the fore or rear wheel (5) arranged to turn a plate 90 degrees relative to the drive chain (4), from longitudinal to transverse, or from transverse to longitudinal. A plate (1) can be turned as indicated in NO341417 by means of cleverly controlled mechanisms and which may include electromagnets, actuators, etc.

However, in an embodiment of the invention, the turning mechanism (9) can be embodied without control mechanisms of electronic type. In an embodiment of the invention, the reversing mechanism is a so-called Geneva mechanism (90). Such a Geneva mechanism (90) comprises, in a more substantial embodiment, an index wheel (91) coupled to each plate (1) or its vertical axle. The index wheel has a cross-shaped index track (94) which is driven around 90 degrees at a time by an index pin (92) each time the index pin is rotated 360 degrees around a counting wheel (93). The counting wheel (93) may be arranged to run onto a curved friction path (95) arranged by the front and rear wheel (5) and that has a length corresponding to a full rotation of the counting wheel (93). In this way the plate (1) is turned a quarter turn every time it passes the fore or rear wheel (5). Such a Geneva mechanism (90) that turns the plate (1) does not need an electronic control and can be fitted with a spring-loaded stop mechanism which holds the index plate each of the four directions once it first has been turned 90 degrees, so that the plate (1) does not rotate uncontrollably between every turn.

In one embodiment of the invention, the generator (G) may be connected to a power grid extending partly through the sea and delivers electrical energy to a receiver wherever you wish. In an alternative embodiment of the invention, the generator (G) may comprise a hydrogen plant which converts seawater to hydrogen and oxygen and supplies compressed or liquid hydrogen (and oxygen separately) at the desired pressure for ships or pipelines, unless connection to a power grid is economically beneficial.

## Claims

1. An ocean current turbine for converting water currents' energy, comprising the following features:
- a main frame (0) arranged to stand submerged in a water current (F) in the sea or in a river,
- wherein the main frame (0) comprises
- a bow part (PB) arranged to face directly towards the water current (F),
- one or more starboard and port endless rotation chains (4) with plates (1) arranged to being captured at the bow part (PB) and driven rearward by the water current (F),
- wherein each of the one or more starboard and port endless rotation chains (4) runs about and in driving engagement with one or more driven wheels (5) that operates a generator (G), and
- port and starboard side frames (PS, PP) that are continuously convex and extends from the bow part (PB) and rearward to
- a transverse wide stern part (PA) that is narrower than the greatest distance between port and starboard side frames (PS, PP),
- wherein the one or more starboard and port endless rotation chains (4) comprise a starboard endless rotation chain and a port endless rotation chain (4) wherein each of the starboard endless rotation chain and the port endless rotation chain is provided with the plates (1), arranged to run along the starboard and port side frames (PS, PP), and
- a turning mechanism (9) arranged to turn each plate (1) to catch the water current (F) at the bow part (PB), so that each plate (1) is driven rearward along the starboard, respectively port side frame (PS, PP), back to the rear by of the wide stern part (PA), and where the turning mechanism (9) turns each plate (1) to a passive state where the plate (1) does not substantially catch the water current when the plate (1) is led forward again by the starboard endless rotation chain or the port endless rotation chain (4) in a shielded cavity (PH) between starboard and port side frames (PS, PP) and extending to the bow part (PB), whereby that the bow part (PB) forms a wide shield forming a width corresponding to between 1/4 and 1/2 of a length (L) of a largest width (PPB) of the main frame (0), and which follows the starboard and port side frames (PS, PP) backwards to a point where a water velocity along the port and starboard side frames (PS, PP) is greater than an initial speed of the incoming water current (F).

2. The ocean current turbine according to claim 1, wherein half the width of the transverse wide stern part (PA) divided by the length (L) of the main frame (0) is approximately equal to tangent of 15 degrees.

3. The ocean current turbine according to any one of the preceding claims, wherein the turning mechanism (9) comprises a Geneva-mechanism (90) arranged to turn the plate (1) 90 degrees relative to the rotation chain (4) while the plate (1) passes by a front and at a rear driven wheel (5).

## Patentansprüche

1. Meeresströmungsturbine zum Umwandeln der Energie von Wasserströmungen, welche die folgenden Merkmale umfasst:
- einen Hauptrahmen (0), der angeordnet ist, um eingetaucht in einer Wasserströmung (F) im Meer oder in einem Fluss zu stehen,
- wobei der Hauptrahmen (0) Folgendes umfasst
- einen Bugteil (PB), der angeordnet ist, um direkt hin zu der Wasserströmung (F) zu zeigen,
- eine oder mehrere Steuerbord- und Backbord-Endlosrotationsketten (4) mit Platten (1), die angeordnet sind, um an dem Bugteil (PB) ergriffen und durch die Wasserströmung (F) nach hinten getrieben zu werden,
- wobei jede von der einen oder den mehreren Steuerbord- und Backbord-Endlosrotationsketten (4) um ein oder mehrere angetriebene Räder (5) und in Antriebseingriff mit denselben läuft, die einen Generator (G) betreibt, und
- Backbord- und Steuerbord-Seitenrahmen (PS, PP), die durchgehend konvex sind und sich von dem Bugteil (PB) aus und nach hinten erstreckt zu
- einem breiten Querheckteil (PA), der schmaler ist als die größte Entfernung zwischen den Backbord- und Steuerbord-Seitenrahmen (PS, PP),
- wobei die eine oder die mehreren Steuerbord- und Backbord-Endlosrotationsketten (4) eine Steuerbord-Endlosrotationskette und eine Backbord-Endlosrotationskette (4) umfassen, wobei jede der Steuerbord-Endlosrotationskette und der Backbord-Endlosrotationskette mit den Platten (1) versehen ist, die angeordnet sind, um entlang des Steuerbord- und des Backbord-Seitenrahmens (PS, PP) zu laufen, und
- einen Drehmechanismus (9), der angeordnet ist, um jede Platte (1) zu drehen, um die Wasserströmung (F) an dem Bugteil (PB) einzufangen, so dass jede Platte (1) nach hinten entlang des Steuerbord- beziehungsweise des Backbord-Seitenrahmen (PS, PP), zurück zu der Rückseite durch an dem breiten Heckteil (PA), getrieben wird, und wobei der Drehmechanismus (9) jede Platte (1) zu einem passiven Zustand dreht, wobei die Platte (1) die Wasserströmung im Wesentlichen nicht einfängt, wenn die Platte (1) durch die Steuerbord-Endlosrotationskette oder die Backbord-Endlosrotationskette (4) wieder nach vorn geführt wird in einem abgeschirmten Hohlraum (PH) zwischen dem Steuerbord- und dem Backbord-Seitenrahmen (PS, PP) und der sich zu dem Bugteil (PB) erstreckt, wodurch der Bugteil (PB) eine breite Abschirmung bildet, die eine Breite bildet, die zwischen 1/4 und 1/2 einer Länge (L) einer größten Breite (PPB) des Hauptrahmens (0) entspricht, und die dem Steuerbord- und dem Backbord-Seitenrahmen (PS, PP) nach hinten bis zu einem Punkt folgt, wo eine Wassergeschwindigkeit entlang des Steuerbord- und des Backbord-Seitenrahmens (PS, PP) größer ist als eine anfängliche Geschwindigkeit der ankommenden Wasserströmung (F).

2. Meeresströmungsturbine nach Anspruch 1, wobei die halbe Breite des breiten Querheckteils (PA), geteilt durch die Länge (L) des Hauptrahmens (0) annähernd gleich dem Tangens von 15 Grad ist.

3. Meeresströmungsturbine nach einem der vorhergehenden Ansprüche, wobei der Drehmechanismus (9) einen Malteserkreuz-Mechanismus (90) umfasst, der angeordnet ist, um die Platte (1) um 90 Grad im Verhältnis zu der Rotationskette (4) zu drehen, während die Platte (1) an einer Vorderseite und bei einem hinteren angetriebenen Rad (5) vorbeizieht.

## Revendications

1. Turbine à courants océaniques permettant de convertir l'énergie de courants d'eau, comprenant les caractéristiques suivantes :
- un bâti principal (0) agencé pour se tenir en position verticale tandis qu'il est submergé dans un courant d'eau (F) dans la mer ou dans un fleuve,
- dans laquelle le bâti principal (0) comprend :
- une partie cambrée (PB) agencée pour être orientée directement en direction du courant d'eau (F),
- une ou plusieurs chaînes de rotation sans fin en tribord et en bâbord (4) munies de plaques (1) agencées pour être capturées au niveau de la partie cambrée (PB) et entraînées vers l'arrière par le courant d'eau (F),
- dans laquelle chacune des une ou plusieurs chaînes de rotation sans fin en tribord et en bâbord (4) se déplace autour d'une ou de plusieurs roues entraînées (5) et selon un engagement d'entraînement avec celles-ci, qui fait fonctionner un générateur (G), et
- des bâtis latéraux en bâbord et en tribord (PS, PP) qui sont convexes en continu et s'étend depuis la partie cambrée (PB) et vers l'arrière jusqu'à
- une partie de poupe large transversale (PA) qui est plus étroite que la distance la plus grande entre les bâtis latéraux en bâbord et en tribord (PS, PP),
- dans laquelle les une ou plusieurs chaînes de rotation sans fin en tribord et en bâbord (4) comprennent une chaîne de rotation sans fin en tribord et une chaîne de rotation sans fin en bâbord (4), dans laquelle chacune de la chaîne de rotation sans fin en tribord et de la chaîne de rotation sans fin en bâbord est munie des plaques (1), agencées pour se déplacer le long des bâtis latéraux en tribord et en bâbord (PS, PP), et
- un mécanisme de rotation (9) agencé pour faire tourner chaque plaque (1) pour capturer le courant d'eau (F) au niveau de la partie cambrée (PB), de telle sorte que chaque plaque (1) soit entraînée vers l'arrière le long du bâti latéral en tribord, respectivement en bâbord (PS, PP), de retour vers l'arrière par de la partie de poupe large (PA), et dans laquelle le mécanisme de rotation (9) fait tourner chaque plaque (1) vers un état passif, la plaque (1) ne capturant pas de façon substantielle le courant d'eau lorsque la plaque (1) est avancée à nouveau par la chaîne de rotation sans fin en tribord ou la chaîne de rotation sans fin en bâbord (4) à l'intérieur d'une cavité protégée (PH) située entre les bâtis latéraux en tribord et en bâbord (PS, PP) et s'étendant jusqu'à la partie cambrée (PB), moyennant quoi la partie cambrée (PB) forme une protection large formant une largeur correspondant à entre 1/4 et 1/2 d'une longueur (L) d'une largeur la plus grande (PPB) du bâti principal (0), et qui suit les bâtis latéraux en tribord et en bâbord (PS, PP) vers l'arrière jusqu'à un point au niveau duquel une vitesse de l'eau le long des bâtis latéraux en bâbord et en tribord (PS, PP) est plus grande qu'une vitesse initiale du courant d'eau arrivant (F).

2. Turbine à courants océaniques selon la revendication 1, dans laquelle la moitié de la largeur de la partie de poupe large transversale (PA) divisée par la longueur (L) du bâti principal (0) est approximativement égale à la tangente de 15 degrés.

3. Turbine à courants océaniques selon l'une quelconque des revendications précédentes, dans laquelle le mécanisme de rotation (9) comprend un mécanisme à croix de Malte (90) agencé pour faire tourner la plaque (1) de 90 degrés par rapport à la chaîne de rotation (4) tandis que la plaque (1) passe à côté d'une roue entraînée avant et au niveau d'une roue entraînée arrière (5).
